# EUROPEAN PATENT APPLICATION

(11) **EP 4 400 945 A1**
(43) Date of publication of application: **17.07.2024**
(21) Application number: 23154176.4
(22) Date of filing: 31.01.2023
(51) Int. Cl.: G06F 3/01

(54) **IMPROVEMENTS IN TOUCHLESS STEERING WHEEL CONTROL**

(30) Priority: 12.01.2023 EP 23151417
(71) Applicant: AMERIA AG, 69124 Heidelberg (DE)
(72) Inventor: Seiler, Martin, 79238 Ehrenkirchen (DE); Ensslen, Christian, 70469 Stuttgart (DE); Hixon, Dennis, 74931 Lobbach (DE); Schneider, Franziska, 76275 Ettlingen (DE); Rothvoss Buchheimer, Maria, 69214 Eppelheim (DE); Metter, Albrecht, 69120 Heidelberg (DE)
(74) Representative: Best, Bastian

(57) **Abstract**

The present invention concerns a computer-implemented touchless control method, the method comprising: observing (202) an interaction space defined based on at least parts of fields of view of a plurality of sensor devices (504), wherein each sensor device (504) of the plurality of sensor devices (504) comprises one or more sensors; entering (204) a steering wheel mode (302) in response to tracking both a left hand (102) and a right hand (104) of a user in the interaction space; determining (206) a steering direction based on a position of the left hand (102) and a position of the right hand (104) relative to each other; and generating (208) a control command indicating at least the steering direction.

## Description

### TECHNICAL FIELD

The present invention generally relates to techniques for controlling a user interface or a device in a touchless manner, and more particularly to a touchless control method for enabling a steering wheel gesture.

### BACKGROUND

Display means have nowadays become omnipresent in various areas of modern life. Examples include electronic display screens or electronic display projectors in public places which provide useful information to the user, e.g., in shopping malls, trade shows, train stations, airports, and the like, a field which is commonly termed "digital signage". Display systems like these serve to convey information to the users, and may also be configured to let the users input information in an interactive manner. Further applications include various gaming applications, e.g., role playing games, simulation games, sports games, action-adventure games, survival games, shooters or real-time strategy games.

One particular type of gaming application is a racing game. Racing games have grown in popularity in recent years, with an increasing number of people playing them on gaming consoles, personal computers, and mobile devices. These games are typically controlled using physical controllers, such as a joystick or a gamepad, or by using a keyboard and mouse.

However, there has been a growing interest in using touchless gestures to control racing games. The idea behind this is typically to allow the user to mimic holding a steering wheel, which is expected to be more immersive and realistic than using traditional controllers. There have been several concepts proposed for touchless control of racing games, such as using hand gestures or body movements.

For example, B. Ganguly et al.: "Gesture based Virtual Reality Implementation for Car Racing Game employing an Improved Neural Network" (International Journal of Engineering Research & Technology, 8(1), pp: 1-6, Jan. 2019) discloses a gesture-based system for controlling a car racing game using a Microsoft Kinect sensor. The system tracks four joints of the user, namely the hip center, shoulder center, left hand, right hand to estimate the steering direction.

While the discussed concepts have the potential to improve the gaming experience, they also have several drawbacks. One main drawback of existing touchless control approaches is that they tend to rely on complex gesture recognition models that require tracking multiple joints of the user's body, which can be difficult and time-consuming to set up. Additionally, because these models typically rely on a single user-facing sensor, they may not be able to accurately recognize gestures in some scenarios, leading to errors in the game control.

It is worth noting that these touchless control concepts may also be useful in other scenarios beyond digital signage and gaming. For example, they can be used to control real-world technical devices such as a car, or to navigate virtual environments like the Metaverse, or hybrid environments using augmented reality.

Thus, there is a need for a touchless control method based on a steering wheel gesture that overcomes the drawbacks of existing approaches.

### SUMMARY OF THE INVENTION

The problem is solved by the subject-matter defined in the independent claims. Advantageous modifications of embodiments of the invention are defined in the dependent claims as well as in the description and the figures.

In one aspect of the present invention, a touchless control method is provided. The method may be computer-implemented. Touchless control may include any type of interaction of a user with a device or its user-interface without the user being required to make physical contact. In particular, touchless input to an electronic display is included. Examples for touchless inputs are movements of a cursor which is displayed to the user via the electronic display, click operations or gestures.

The method may comprise observing an interaction space. The interaction space may be defined based on at least parts of fields of view of a plurality of sensor devices. Each sensor device of the plurality of sensor devices may comprise one or more sensors. Each sensor device of the plurality of sensor devices may be of a same type. Each sensor device of the plurality of sensor devices may be a separate device, preferably comprising a dedicated housing. A sensor device may include a sensor or a plurality of sensors, a sensor assembly or a sensor array which is able to capture the relevant information in order to translate a movement and/or position and/or orientation of a user's hand or hands or other input object(s) into control commands.

As mentioned, the sensors may be arranged such as to observe an interaction space. The interaction space may for example be a space between the user and a display means. However, the concepts of the invention may similarly be employed in scenarios without a display means, but the interaction space may rather be a defined space of any shape or form in which user gestures can be observed. In a preferred embodiment, at least two sensor devices are provided and placed such as to observe the interaction space.

The method may comprise entering a steering wheel mode in response to tracking both a left hand and a right hand of a user in the interaction space. The method may comprise determining a steering direction based on a position of the left hand and a position of the right hand relative to each other. The method may comprise generating a control command indicating at least the steering direction.

This way, virtually any type of device can be controlled by a touchless steering wheel gesture. Using a plurality of sensor devices for detecting a two-handed gesture, such as a steering wheel gesture, has various technical advantages, including without limitation:
1. Improved tracking of both hands: Using multiple sensors may allow for the simultaneous tracking of both hands, providing more information for the gesture recognition algorithm and enabling more a nuanced recognition of the two-handed steering wheel gesture.
2. Enhanced spatial awareness: With multiple sensors, the system can track the relative positions and orientations of both hands, allowing for more precise and accurate control of the virtual environment.
3. Improved gesture recognition accuracy: By tracking both hands, the system can use the relative position and/or orientation of the hands to improve the accuracy of gesture recognition, as the gesture recognition algorithm can use the spatial relationship between the hands to detect the steering wheel gesture with improved reliability.
4. Increased number of gestures: With the ability to track both hands, the system may be able to recognize slight variations of the steering wheel gesture if desired.
5. Increased immersive experience: Tracking both hands may allow the user to perform the steering wheel gesture in a more natural way, making the interaction more immersive and realistic, which can enhance the user's experience.
6. Improved hand-eye coordination: The use of two sensors may allow the system to detect and track the movement of both hands simultaneously and, as a result, more smoothly or quickly, which may help the user to improve their hand-eye coordination when playing games or interacting with virtual environments.
7. Better handling of occlusions: With multiple sensors, the system may handle situations where one hand is occluded from the view of one sensor, by using the data from other sensors to track the other hand movements and infer the position of the occluded hand.
8. Greater flexibility in sensor placement: By using multiple sensors, the system has more possibilities for arranging the sensors, which allows for greater flexibility in the design of the system. This can make it more adaptable to a wide variety of applications, such as gaming, virtual environments, and industrial automation. This allows the system to be optimized for the specific requirements of each application, and to be used in a wide range of different environments, including small and large spaces, indoor and outdoor settings, and with different types of equipment.

The control command may be configured to be compatible with a target device and/or application. In other words, it may comprise instructions and/or data which are usable by a device and/or application. For example, a vehicle or a vehicle controller may control the wheels in accordance with the control command. As another example, an electronic device or other display system may control a cursor or pointer in accordance with the control command.

Entering a steering wheel mode in response to tracking both a left hand and a right hand of a user in the interaction space may provide a particularly intuitive, robust and efficient human-machine interaction, and may be provided independent of the number of sensor devices used to observe the interaction space. In particular, entering a steering wheel mode in the described manner may also be provided in combination with using only one sensor device. In general, entering a steering wheel mode in response to tracking both a left hand and a right hand of a user in the interaction space may provide various technical advantages, including without limitation:
1. Increased efficiency: By automatically transitioning into a predefined control mode (here: steering wheel mode) upon recognition of a particular hand gesture (here: steering wheel gesture), the system can streamline the user's interaction with the device, making it more efficient and faster.
2. Improved user experience: Automatic transition into a predefined control mode (here: steering wheel mode) can reduce the number of steps required for the user to initiate a specific function, which can improve the overall user experience.
3. Reduced cognitive load: By automating the transition into a control mode (here: steering wheel mode), the system can reduce the cognitive load on the user, allowing them to focus on the task at hand, rather than managing the interface.
4. Increased ease of use: Automatic transition into a control mode (here: steering wheel mode) can make the system more intuitive and easier to use, making it more accessible to a wider range of users.
5. Increased safety: By automating the transition into a control mode (here: steering wheel mode), the system can ensure that the user is in the correct mode for the task at hand, which can increase safety in certain situations.
6. Increased consistency: Automating the transition into a control mode (here: steering wheel mode) can ensure that the system always behaves in the same way, which can increase consistency and predictability in the user experience.

The steering direction may be determined based only on the position of the left hand and the position of the right hand, in particular relative to each other. Accordingly, only two joints need to be tracked by the user, which has various technical advantages, including without limitation:
1. Reduced computational complexity: By tracking only two joints, the gesture recognition algorithm may require less processing power and/or less memory, making it more efficient and easier to implement.
2. Increased speed: By tracking fewer joints, the system may be able to process the data faster, reducing the latency of the gesture recognition algorithm and providing a more responsive user experience.
3. Reduced cost: Tracking only two joints can reduce the cost of the system, as less computational power is required.
4. Increased robustness: By tracking only the most essential joints, the gesture recognition algorithm can be more robust to noise and other types of errors, as it is less sensitive to small variations in the data.
5. Increased battery life: Tracking fewer joints requires less power, this can lead to an increase in the battery life of the device.
6. Simplified system design: By tracking only two joints, the system can be simpler to design and implement, reducing the complexity of the overall system.
7. Increased ease of use: Tracking only two joints can make the system more intuitive and easier to use, which can improve the user experience and make the system more accessible to a wider range of users.

As already mentioned, a plurality of sensor devices may be used in aspects of the present invention. Generally speaking, the plurality of sensor devices may comprise any number of sensor devices. However, in certain aspects of the present invention, configurations with two sensor devices, three sensor devices or four sensor devices are particularly preferred. Accordingly, the plurality of sensor devices may comprise or consist of a first sensor device and a second sensor device. The plurality of sensor devices may comprise or consist of a first sensor device, a second sensor device and a third sensor device. The plurality of sensor devices may comprise or consist of a first sensor device, a second sensor device, a third sensor device and a fourth sensor device. It has been found that these configurations present an optimal trade-off between conflicting technical objectives that occur as the number of sensor devices increases in a gesture recognition system, including without limitation:
1. Increased cost: Adding more sensors to the system can increase the cost of hardware and development. This can be a trade-off for adding more functionality or increased accuracy.
2. Increased complexity: With more sensors, the system becomes more complex, which can make it more difficult to design, develop and maintain. This can be a trade-off for increasing the accuracy of the system.
3. Increased power consumption: More sensors means more power consumption, which can reduce the battery life of the device. This can be a trade-off for increasing the functionality or accuracy of the system.
4. Increased latency: With more sensors, the system may require more processing power to interpret the data, which can increase the latency of the system. This can be a trade-off for increasing the accuracy or the number of gestures that can be recognized.
5. Increased data storage: More sensors means more data being collected, which can increase the storage requirements of the system. This can be a trade-off for increasing the accuracy or the number of gestures that can be recognized.

The plurality of sensor devices may be arranged in predefined positions and/or orientations relative to each other and/or relative to the interaction space, comprising one or more of:
- Two sensor devices being arranged on an essentially horizontal axis, an essentially vertical axis, an essentially diagonal axis or an axis with a predefined angle;
- Two sensor devices being arranged at or near borders of the interaction space, preferably at opposing sides of the interaction space, optionally with a predefined distance from the interaction space;
- Two sensor devices being arranged such that a field of view of one sensor device overlaps with a field of view of the other sensor device;
- Two sensor devices being arranged such that a viewing direction of one sensor device is oriented essentially at the other sensor device or a viewing direction of one sensor device forms an angle with a viewing direction of the other sensor device;
- Two sensor devices or all sensor devices being arranged axisymmetric relative to a horizontal and/or vertical center axis of the interaction space;
- Two sensor devices or all sensor devices being arranged point symmetric relative to a center point of the interaction space;
- Two sensor devices or all sensor devices being arranged asymmetrical relative to a horizontal or vertical axis or a center point of the interaction space.

Accordingly, various sensor device arrangements are conceivable in aspects of the present invention, thereby providing a particularly versatile gesture recognition technique. Preferred configurations will be discussed in the detailed description.

In aspects of the present invention, a sensor device may generally comprise any device that is used to detect or measure physical properties of the environment. The sensor device may be an imaging device understood as a subcategory of sensor devices that use light or other forms of electromagnetic radiation to capture images or video. The imaging device may be an optical device understood as a subcategory of imaging devices that use visible or near-visible light to capture images or video. The optical device may be a camera understood as a subcategory of optical devices that capture images or video by focusing light onto an image sensor. The camera may be a 3D camera understood as a subcategory of cameras that capture images with three-dimensional information. The 3D camera may be a depth camera understood as a subcategory of 3D cameras that specifically captures depth information by using techniques such as stereo vision, structured light, or time-of-flight measurements. The plurality of sensor devices may comprise a plurality of depth sensing devices, more preferably a plurality of depth cameras. An example for a depth camera is the Intel RealSense depth camera.

The steering direction may indicate one of a plurality of discrete steering directions. The plurality of discrete steering directions may comprise straight driving, steering left and/or steering right. In a preferred aspect of the present invention with discrete steering directions, the plurality of discrete steering directions consists of three steering directions, namely straight driving, steering left, and steering right. Deriving discrete steering directions from the user's steering wheel gesture has a variety of technical advantages, including without limitation:
1. Simplicity: Deriving a discrete steering direction from a steering wheel gesture simplifies the gesture recognition process as it only requires identifying whether the gesture is left, right or neutral, rather than recognizing a continuous range of steering angles.
2. Reduced computational complexity: By reducing the range of possible steering directions, the computational requirements for recognizing a gesture can be reduced, which can lead to faster and more responsive control.
3. Increased robustness: With a discrete steering direction, the system is less sensitive to variations in the way a gesture is performed, which can increase the robustness of the system.
4. Increased ease of use: A discrete steering direction is easy to understand and perform, which can increase the ease of use of the system.
5. Increased compatibility: A discrete steering direction can be more easily mapped to existing control schemes, which can increase the compatibility of the system.
6. Increased reliability: By reducing the range of possible steering directions, the system can reduce the chances of misinterpreting a gesture, which can increase the reliability of the system.

The above-explained discrete steering directions may be especially beneficial, for example, for simple car racing games, for example car racing games in which the user can steer the car from one lane to another adjacent lane in a discreet fashion.

Alternatively or in addition, the steering direction may indicate a steering angle, in particular a continuous steering angle, which has a variety of technical advantages, including without limitation:
1. Precision: Deriving a (continuous) steering angle from a steering wheel gesture may allow for more precise control of the vehicle or object being controlled, allowing the user to make more precise turns and adjustments.
2. Realism: A (continuous) steering angle can more closely mimic the behavior of a real steering wheel, providing a more realistic experience for the user.
3. Greater range of control: A (continuous) steering angle may allow for a greater range of control over the vehicle or object being controlled, as opposed to a discrete steering direction.
4. Greater flexibility: A (continuous) steering angle may allow for greater flexibility in the types of vehicles or objects that can be controlled, as it can be applied to a wider range of control systems.
5. Greater realism: A (continuous) steering angle may allow for more realistic behavior of the vehicle or object being controlled, allowing the user to experience more realistic driving or flying sensations.

This way, a more sophisticated and/or fine-grained detection of the user's steering intent may be obtained. This may be beneficial, for example, for more elaborated car racing games or even for controlling a vehicle or other technical device in the real world.

The steering angle may correspond to an orientation of an imaginary straight line between the left hand and the right hand. The orientation may be relative to the interaction space and/or relative to a neutral position of the user and/or relative to a device in which the method is employed and/or relative to the arrangement of sensor devices. This way, the steering angle may be obtained in a particularly simple and efficient manner.

In addition to the steering direction, also other parameters may be indicated in the generated control command. For example, the control command may indicate a rotation speed of the steering wheel gesture, e.g., by way of the change of steering angle values from one sampling of the steering wheel gesture to the next.

The method may comprise, in response to loosing track of the left hand, the right hand or both, prompting the user to move the left hand and/or the right hand such that the left hand and the right hand are essentially arranged at a predefined distance. The predefined distance may be chosen such that the sensor devices can track the left hand and the right hand. The method may comprise, in response to loosing track of the left hand, the right hand or both, prompting the user to hold an object of a predefined size in the left hand and the right hand. In particular, the object may be an electronic mobile device of the user, in particular a smartphone of the user, i.e., a handheld device that allows the user to make phone calls, send text messages, access the internet, and use various apps. When the user holds the hands too far away from each other when performing the steering wheel gesture, it may happen that one of the user's hands or even both hands come too close to the sensor devices, especially when they are arranged on a horizontal axis, e.g., to the left and to the right of the interaction space. It may then happen that the field of view of the sensor device on the right side, which would normally observe the user's left hand, is obstructed by the user's right hand, or it may happen that the field of view of the sensor device on the left side, which would normally observe the user's right hand, is obstructed by the user's left hand, or both. Prompting the user to move the hands so that they have a suitable distance solves this issue. Achieving this by prompting the user to hold the user's electronic mobile device is particularly convenient and immersive.

As an alternative, in response to loosing track of the left hand, the right hand or both, the method may also comprise determining the steering direction to indicate straight driving. In this case, it is accepted that the sensor device(s) is/are obstructed, and it is just assumed that the user is performing a neutral steering wheel gesture, albeit with a distance between the hands which is too large, and so a neutral steering direction is output which indicates straight driving and/or a steering angle of 0°.

When the user steers to the left or right in this scenario, it may happen that the sensor devices stay obstructed for some time while the movement of the user's hands is already ongoing, and that the sensor devices then suddenly become unobstructed when the hands have moved sufficiently. Accordingly, this may create a certain jump from a straight driving detection to a left or right steering detection and may thus be particularly suitable for discrete steering directions, as explained further above.

The method may comprise, in response to tracking only one of the left hand and the right hand of the user in the interaction space, transitioning from the steering wheel mode into another control mode. The other control mode may enable the user to perform one or more of the following functions using touchless hand gestures, in particular one-handed touchless hand gestures: controlling a device, controlling a pointer on a display, controlling an avatar in a virtual scene, controlling a virtual object.

It may be provided that the method transitions automatically back and forth between the steering wheel mode and the other control mode depending on whether two hands are tracked or only one hand is tracked. There are several technical advantages of automatically transitioning between one-handed and two-handed control modes, e.g., the steering wheel mode, depending on how many hands are tracked in a gesture recognition system. Some of these advantages include without limitation:
1. Increased versatility: By automatically transitioning between one-handed and two-handed control modes, the system can adapt to the user's needs in different scenarios. For example, a one-handed control mode may be more appropriate for simple tasks, while a two-handed control mode may be more appropriate for more complex tasks.
2. Improved user experience: By providing different control modes depending on the number of hands tracked, the system can offer a more intuitive and natural control experience for the user. For example, steering a virtual car may be more intuitive with two-handed controls, while controlling media playback may be more natural with one-handed controls.
3. Reduced cognitive load: By automatically transitioning between control modes, the system can reduce the cognitive load on the user, as they do not need to consciously switch between different control modes.
4. Increased precision: Two-handed control mode can provide more precision for certain tasks, such as manipulating virtual objects, as it allows for more degrees of freedom and a more natural way to control the virtual object.
5. Increased safety: In certain cases, such as controlling a real car, two-handed controls can provide better safety and reduce the risk of accidents.
6. Increased functionality: Having multiple control modes can increase the functionality of the system, and allow it to be used in a wider range of applications, such as gaming, home automation and other scenarios.

Overall, automatically transitioning between a one-handed and a two-handed control mode, e.g., the steering wheel mode, can provide a more versatile, intuitive, and natural control experience for the user, and also allows for more precision, safety and functionality. It will be appreciated that the aspects relating to this functionality disclosed herein may be implemented independent of the number of sensor devices, for example in multi-sensor or single-sensor configurations.

The method may determine whether transitioning from the steering wheel mode into another control mode and vice versa should be enabled based on application-specific settings. Additionally or alternatively, the method may distinguish between tracking only one of the hands of the user as an indication that a switch away from the steering wheel mode is desired and tracking only one of the hands of the user as an indication that the other hand is out of range of at least one of the sensor devices based on a noise ratio in the observed interaction space. When one of the hands moves closer to a sensor device than a minimum distance, this may create noise and/or artefacts in at least parts of the interaction space, in certain scenarios even in essentially the entire interaction space. Such noice may be used as an indicator to determine if the loosing track of one hand is on purpose or by accident, and the method may react accordingly.

The method may comprise mapping the steering direction to a pointer position. The pointer position may be a pointer position in two-dimensional space. The control command may comprise the pointer position to indicate the steering direction. This way, the steering direction derived from the user's steering wheel gesture may be injected into an application for further use in the application. In particular, some applications, application programming interfaces or operating systems of electronic devices may only accept pointer positions, for example defined by two-dimensional coordinates. Encoding the determined steering direction as a pointer position allows for inserting the signal into such systems albeit their limited capability.

The pointer position may be selected from one of a plurality of pointer positions and/or pointer position groups corresponding to the plurality of discrete steering directions mentioned in other aspects of the present invention. As a non-limiting example, straight driving may be indicated by a pointer position in the middle of a display area, steering left may be indicated by a pointer position at the left border of the display area, and steering right may be indicated by a pointer position at the right border of the display area.

The pointer position may be selected from a pointer position range corresponding to the steering angle mentioned in other aspects of the present invention. For example, the pointer position range corresponding to the steering angle may comprise a plurality of pointer positions on a straight line, in particular a horizontal straight line on an upper edge of a display area. Using the upper edge of the display area may be beneficial because it is not likely to be confused with other desired user inputs because users seldom perform inputs on the uppermost edge of the display area.

The control command may be configured for various purposes, including without limitation: controlling a game, in particular a racing game, controlling a device, controlling a vehicle, controlling a simulation environment, in particular for training and/or testing purposes, controlling a virtual environment, a physical environment or a hybrid environment, in particular a Metaverse environment, a hybrid meeting environment, a virtual reality environment, an augmented reality environment.

Additional types of environments which may be controlled using concepts described in aspects of the present invention include without limitation:
1. Digital environments: Virtual or computer-generated environments that exist entirely within a computer or other electronic device. Examples of digital environments that can be controlled with gesture recognition include video games, virtual reality and augmented reality applications, digital art programs, interactive museum exhibits, interactive kiosks and displays, virtual tours and real estate visualization, virtual training simulators, 3D modeling and animation software, music and audio production software, educational and learning software, virtual reality movies and videos, virtual reality therapy and rehabilitation, virtual reality social media and communication platforms, virtual reality shopping and e-commerce, virtual reality conferencing and collaboration platforms, virtual reality fitness and health applications, virtual reality tourism and travel experiences.
2. Real-life environments: Physical environments that exist outside of a computer or electronic device. Examples of real-life environments that can be controlled with gesture recognition include smart home automation and control, industrial automation and control, automotive control and navigation, medical equipment and instruments control, robotics and drones control, building management systems, smart city infrastructure control, public transportation systems, retail, hospitality and service industries, gaming and entertainment venues, fitness and sports equipment, smart wearables and personal devices, public displays and interactive installations, surveillance and security systems.
3. Hybrid environments: Environments that combine elements of both digital and real-life environments. Examples of hybrid environments that can be controlled with gesture recognition include mixed reality systems, where virtual objects are superimposed on the real world, and augmented reality systems, where virtual information is overlaid on the real world. The metaverse is a term used to describe a collective virtual shared space, created by the convergence of virtually enhanced physical reality and physically persistent virtual reality, in which people, organizations, and systems can co-exist and interact with each other. Virtual reality and augmented reality are two distinct forms of immersive technology that can be controlled with gesture recognition. Virtual reality is a computer-generated environment that completely immerses the user, while augmented reality superimposes virtual information on the real world.

Generally speaking, any type of technical device or machine may be controlled with the steering wheel gesture in accordance with aspects of the present invention disclosed herein, a preferred type of device being a vehicle. Examples of vehicles and machines that can be controlled include without limitation: cars, sedans, SUVs, and trucks, motorcycles and scooters, bicycles, boats and ships, airplanes and helicopters, tractors and construction equipment, industrial vehicles such as forklifts and cranes, racing simulators and arcade games, robotics and drones, electric wheelchairs and personal mobility devices, racing cars, go-karts, and other high-performance vehicles, recreational vehicles (RVs) and motorhomes, buses and vans, trucks and semi-trucks, bulldozers and excavators, loaders and backhoes, forklifts and other industrial vehicles, snowmobiles and all-terrain vehicles (ATVs), amphibious vehicles and hovercraft, unmanned aerial vehicles (UAVs), self-driving cars and autonomous vehicles, remote control vehicles, electric and hybrid vehicles. This list is not exhaustive, as there are many other types of vehicles or machines that can be controlled by a steering wheel. The advantage of using a steering wheel gesture is that it is intuitive and familiar to most people, making it an easy-to-use and versatile control method.

Another aspect of the present invention concerns the use of at least a first and second sensor device, in particular a first and second depth sensing device, more preferably a first and second depth camera, in any of the methods disclosed herein.

It may be understood that alternative realizations the invention may be obtained by employing any of the aspects of the present invention disclosed herein in combination with only one sensor device, as appropriate.

Another aspect of the present invention concerns a data processing device, a digital signage device, a gaming device, a mobile user device or a control unit for any of these devices, comprising means for carrying out any of the methods disclosed herein.

Another aspect of the present invention concerns a vehicle or machine or a control unit for a vehicle or machine, comprising means for carrying out any of the methods disclosed herein.

Another aspect of the present invention concerns a computer program or a computer-readable medium having stored thereon a computer program, the computer program comprising instructions which, when the program is executed by a computer, cause the computer to carry out any of the methods disclosed herein.

### BRIEF DESCRIPTION OF THE DRAWINGS

The disclosure may be better understood by reference to the following drawings:

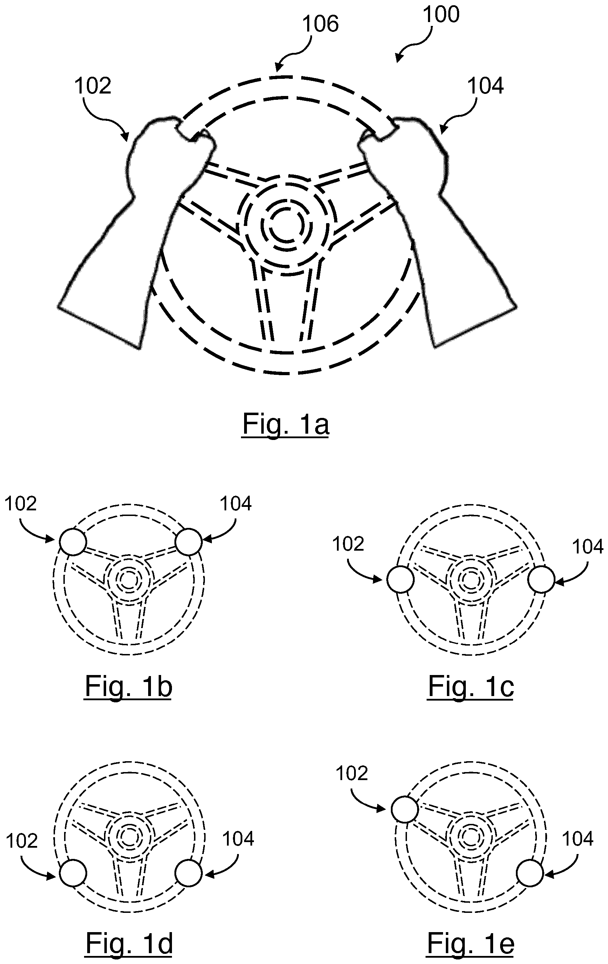

- Fig. 1a:: A steering wheel gesture 100 in accordance with embodiments of the invention.
- Fig. 1b:: A symmetric "10 and 2" hand placement in accordance with embodiments of the invention.
- Fig. 1c:: A symmetric "9 and 3" hand placement in accordance with embodiments of the invention.
- Fig. 1d:: A symmetric "8 and 4" hand placement in accordance with embodiments of the invention.
- Fig. 1d:: An asymmetric "10 and 4" hand placement in accordance with embodiments of the invention.
- Fig. 2:: A flowchart of a method 200 for generating control commands based on a detected steering wheel gesture in accordance with embodiments of the invention.
- Fig. 3:: A state machine 300 of operating states of a gesture recognition system in accordance with embodiments of the invention.
- Fig. 4a:: A straight driving situation indicated by the user's hand placement in accordance with embodiments of the invention.
- Fig. 4b:: A right steering situation indicated by the user's hand placement in accordance with embodiments of the invention.
- Fig. 4c:: A left steering situation indicated by the user's hand placement in accordance with embodiments of the invention.
- Fig. 5a:: A two-sensor configuration of a gesture recognition system associated with a display area in accordance with embodiments of the invention.
- Fig. 5b:: A two-sensor configuration of a gesture recognition system associated with a display area in accordance with embodiments of the invention.
- Fig. 5c:: A two-sensor configuration of a gesture recognition system associated with a display area in accordance with embodiments of the invention.
- Fig. 5d:: A two-sensor configuration of a gesture recognition system associated with a display area in accordance with embodiments of the invention.
- Fig. 6a:: A three-sensor configuration of a gesture recognition system associated with a display area in accordance with embodiments of the invention.
- Fig. 6b:: A three-sensor configuration of a gesture recognition system associated with a display area in accordance with embodiments of the invention.
- Fig. 7a:: A four-sensor configuration of a gesture recognition system associated with a display area in accordance with embodiments of the invention.
- Fig. 7b:: A four-sensor configuration of a gesture recognition system associated with a display area in accordance with embodiments of the invention.
- Fig. 8a:: A two-sensor configuration of a gesture recognition system in an automotive setup in accordance with embodiments of the invention.
- Fig. 8b:: A three-sensor configuration of a gesture recognition system in an automotive setup in accordance with embodiments of the invention.
- Fig. 8c:: A two-sensor configuration of a gesture recognition system in an automotive setup in accordance with embodiments of the invention.
- Fig. 8d:: A three-sensor configuration of a gesture recognition system in an automotive setup in accordance with embodiments of the invention.
- Fig. 8e:: A four-sensor configuration of a gesture recognition system in an automotive setup in accordance with embodiments of the invention.

### DETAILED DESCRIPTION

In the following, exemplary embodiments of a touchless control method for enabling a steering wheel gesture will be described.

Fig. 1a illustrates a steering wheel gesture 100 according to embodiments of the invention. As can be seen, a user person is holding the left hand 102 and the right hand 104 as if they would grasp a steering wheel. The steering wheel illustrated with dashed lines in Fig. 1a is only imaginary and serves to illustrate the gesture 100. However, gesture 100 is a steering wheel gesture without the need for a real steering wheel being involved. In Fig. 1a, the user holds the imaginary steering wheel 106 with the hands 102 and 104 arranged in the so-called "10 and 2" placement, indicating how the hands relate to numbers on a clock, as may be better understood with reference to Fig. 1b where the user's hands are represented as circles 102 and 104. However, the "10 and 2" placement is not required for the concepts of the invention to work. For example, the user may place the hands 102 and 104 in a "9 and 3" placement as illustrated in Fig. 1c which is the recommended driving manner in many countries today. Yet another hand placement is shown in Fig. 1d in which the hands 102 and 104 are arranged below the horizontal center line of the imaginary steering wheel. The steering wheel gestures 100 illustrated in Figs. 1a to 1d have in common that they are symmetric, i.e., the hands 102 and 104 are held essentially at the same height, which resembles the intuitive fashion in which most people perform a steering wheel gesture. In certain embodiments of the invention, this neutral steering wheel gesture 100 is interpreted as the desire of the user to drive straight.

In alternative embodiments, straight driving may be indicated by a non-symmetrical placement of the hands 102 and 104. Such a scenario is illustrated in Fig. 1e in which the user holds the left hand 102 and right hand 104 at something like a "10 and 4" placement. In certain embodiments of the invention, also such non-neutral steering wheel gestures 100 may be interpreted as the desire of the user to drive straight, e.g., by way of a learning mode in which the user is prompted to make a steering wheel gesture as if the user was driving straight and then recording the hand placement.

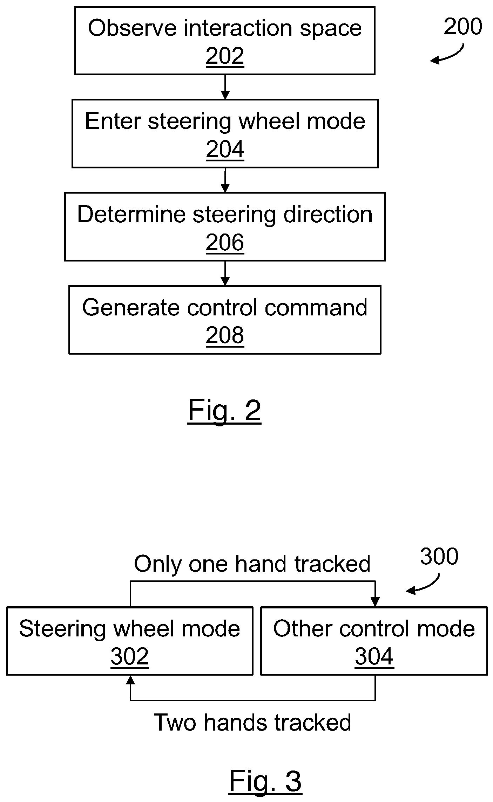

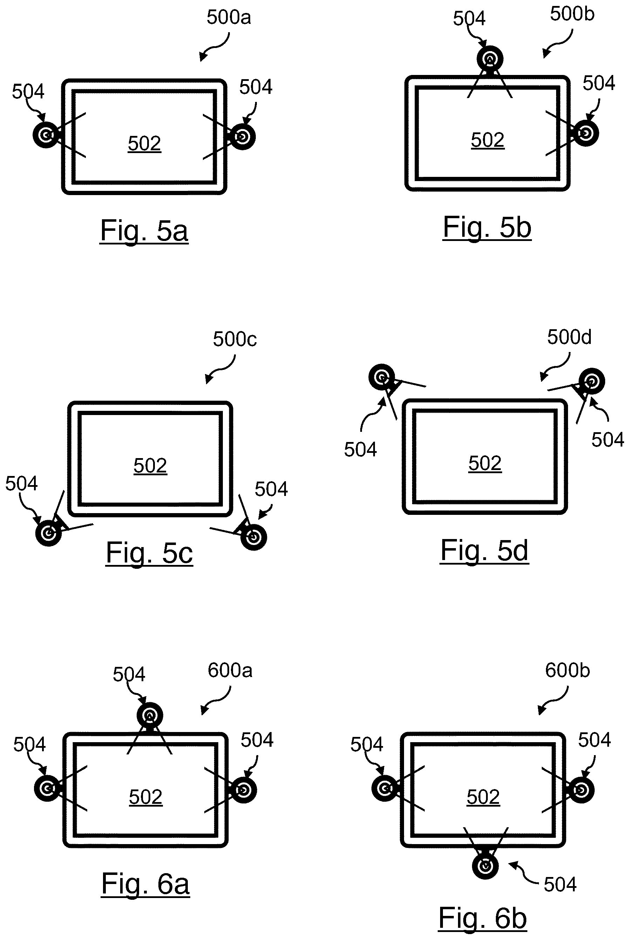

Fig. 2 illustrates a method 200 according to an embodiment of the present invention. The method 200 generally serves for generating control commands based on a detected steering wheel gesture 100. An interaction space is observed in step 202. As will be explained in more detail further below with reference to Figs. 5a-d, 6a-b, 7a-b and 8a-e, the interaction space may be defined based on fields of view (or at least parts thereof) of a plurality of sensor devices 504. Each sensor device 504 of the plurality of sensor devices 504 may comprise one or more sensors. In response to tracking both the left hand 102 and the right hand 104 of the user in the interaction space, a steering wheel mode 302 (see Fig. 3) is entered in step 204. A steering direction is determined in step 206 based on a position of the left hand 102 and a position of the right hand 104 relative to each other. A control command indicating at least the steering direction is generated in step 208. This way, a technical device, such as a vehicle, or a virtual environment, such as a game, can be controlled by way of the steering wheel gesture 100, to name just two of a variety of application scenarios of embodiments of the present invention.

Fig. 3 illustrates a state machine 300 of operating states of a gesture recognition system according to an embodiment of the present invention. As can be seen, the above-mentioned steering wheel mode 302 is entered when two hands 102 and 104 are tracked in the interaction space, and another control mode 304 is entered when only one hand is tracked which may be either the left hand 102 or the right hand 104 of the user. The transition from the steering wheel mode 302 into the other control mode 304 and vice-versa may happen automatically in response to the respective number of hands tracked, i.e., without additional user interaction.

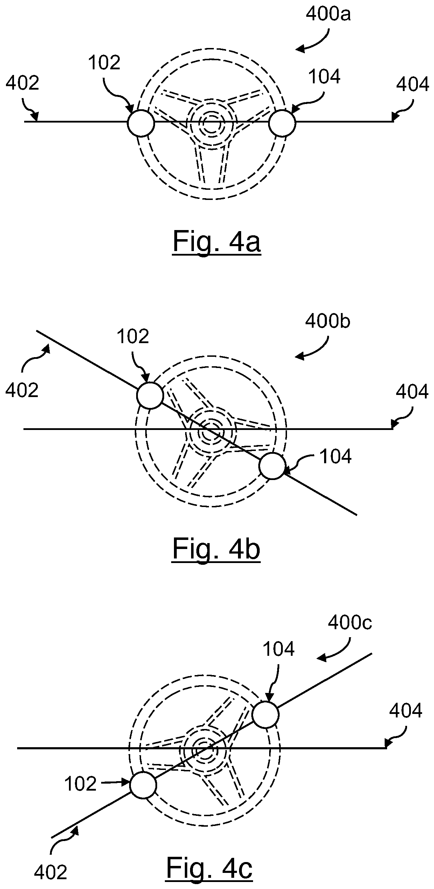

Fig. 4a illustrates a straight driving situation indicated by the placement of the hands 102 and 104 according to one embodiment of the present invention. As can be seen, an imaginary straight line 402 through the left hand 102 and the right hand 104 coincides with a horizontal axis 404 (horizontal with respect to the imaginary steering wheel in the illustrated example). Accordingly, the angle between the line 402 and the axis 404 is 0°. Fig. 4b illustrates a right steering situation indicated by the placement of the hands 102 and 104 according to one embodiment of the present invention. As can be seen, the line 402 is at a corresponding angle to the axis 404. Fig. 4c illustrates a left steering situation indicated by the placement of the hands 102 and 104 according to one embodiment of the present invention. As can be seen, the line 402 is also here at a corresponding angle to the axis 404. Using the angle between the line 402 and the axis 404 allows to determine the steering angle desired by the user.

Figs. 5a-d, 6a-b and 7a-b illustrate various configurations of gesture recognition systems in which sensor devices 504 are arranged relative to a display area 502 according to exemplary embodiments of the present invention. In the illustrated embodiments, the sensor devices 504 are depth cameras. Alternative embodiments may be provided by replacing some or all of the depth cameras 504 with other types of sensor devices. The depth cameras 504, more precisely their respective fields of view, jointly define an interaction space, i.e., a three-dimensional space which is observed by the depth cameras 504 and in which the user may perform gestures that can be recognized by the system. The display area 502 may be associated with an electronic display screen, a projection, or any other way how digital content may be visually displayed.

Figs. 5a-d illustrate two-sensor configurations in accordance with exemplary embodiments of the present invention. In the configuration 500a in Fig. 5a, the two sensors 504 are arranged on the left-hand side and on the right-hand side of the display area, respectively. In the configuration 500b in Fig. 5b, one sensor 504 is arranged on the right-hand side (it could alternatively be arranged on the left-hand side) and the other sensor 504 is arranged on top of the display area 502 (it could alternatively be arranged below the display area 502). In the configuration 500c in Fig. 5c, the two sensors 504 are arranged at the bottom left corner and the bottom right corner of the display area 502, respectively. In the configuration 500d in Fig. 5d, the two sensors 504 are arranged at the top left corner and the top right corner of the display area 502. respectively. The orientation of the sensors 504 as well as the distance between the sensors 504 and the display area 502 can be chosen depending on the circumstances.

Figs. 6a-6b illustrate three-sensor configurations in accordance with exemplary embodiments of the present invention. The configuration 600a in Fig. 6a resembles that of configuration 500a in Fig. 5a with an additional third sensor 504 on top of the display area 502. The configuration 600b in Fig. 6b resembles that of configuration 500a in Fig. 5a with an additional third sensor 504 below the display area 502.

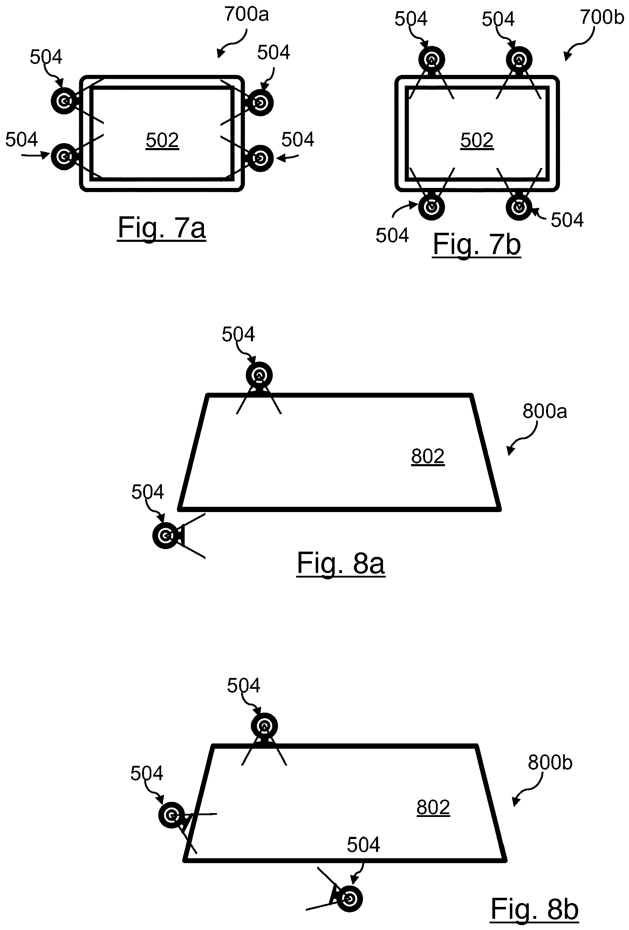

Figs. 7a-7b illustrate four-sensor configurations in accordance with exemplary embodiments of the present invention. The configuration 700a in Fig. 7a resembles that of configuration 500a in Fig. 5a but with two sensors 504 on each side. In the configuration 700b in Fig. 7b, the four sensors 504 are arranged on the long edge of the display area 502.

Fig. 8a-8e illustrate various configurations of gesture recognition systems in which sensor devices 504 are arranged relative to a cockpit 802 in an automotive context according to exemplary embodiments of the present invention. Also here, the sensor devices 504 are depth cameras, while alternative embodiments may be provided by replacing some or all of the depth cameras 504 with other types of sensor devices, as in the other embodiments described herein.

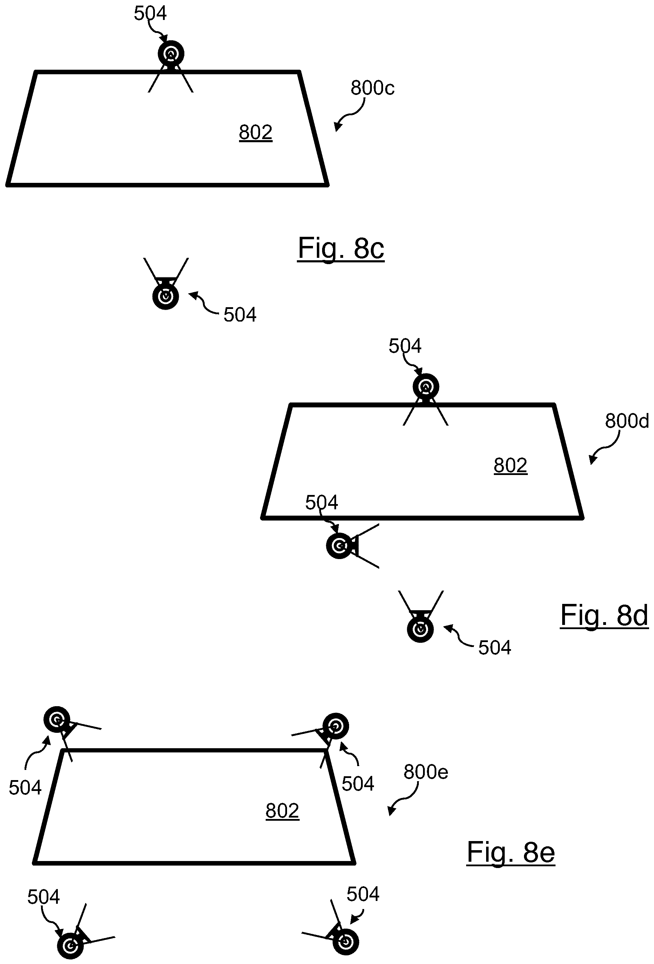

Fig. 8a illustrates an exemplary two-sensor configuration 800a and Fig. 8b illustrates an exemplary three-sensor configuration 800b suitable for a left-hand-drive vehicle. The skilled person will appreciate that the illustrated setups may readily be adapted for a right-hand-drive vehicle. Figs. 8c, 8d and 8e illustrate a respective two-sensor configuration 800c, three-sensor configuration 800d and four-sensor configuration 800e in which the interaction space is not primarily directed to either the left-hand or the right-hand side of the cockpit but more wider to the majority of the cockpit, which may be suitable for autonomous driving scenarios and future cockpit layouts.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the invention may be implemented on a computer system. The computer system may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented touchless control method, the method comprising:
observing (202) an interaction space defined based on at least parts of fields of view of a plurality of sensor devices (504), wherein each sensor device (504) of the plurality of sensor devices (504) comprises one or more sensors;
entering (204) a steering wheel mode (302) in response to tracking both a left hand (102) and a right hand (104) of a user in the interaction space;
determining (206) a steering direction based on a position of the left hand (102) and a position of the right hand (104) relative to each other; and
generating (208) a control command indicating at least the steering direction.

2. The method of claim 1, wherein the steering direction is determined based only on the position of the left hand (102) and the position of the right hand (104) relative to each other.

3. The method of claim 1 or 2,
wherein the plurality of sensor devices (504) comprises or consists of:
a first sensor device and a second sensor device;
a first sensor device, a second sensor device and a third sensor device; or
a first sensor device, a second sensor device, a third sensor device and a fourth sensor device;
wherein the plurality of sensor devices are arranged in predefined positions and/or orientations relative to each other and/or relative to the interaction space, comprising one or more of:
two sensor devices being arranged on an essentially horizontal axis, an essentially vertical axis, an essentially diagonal axis or an axis with a predefined angle;
two sensor devices being arranged at or near borders of the interaction space, preferably at opposing sides of the interaction space, optionally with a predefined distance from the interaction space;
two sensor devices being arranged such that a field of view of one sensor device overlaps with a field of view of the other sensor device;
two sensor devices being arranged such that a viewing direction of one sensor device is oriented essentially at the other sensor device or a viewing direction of one sensor device forms an angle with a viewing direction of the other sensor device;
two sensor devices or all sensor devices being arranged axisymmetric relative to a horizontal and/or vertical center axis of the interaction space;
two sensor devices or all sensor devices being arranged point symmetric relative to a center point of the interaction space;
two sensor devices or all sensor devices being arranged asymmetrical relative to a horizontal or vertical axis or a center point of the interaction space.

4. The method of any one of the preceding claims, wherein the plurality of sensor devices (504) comprises a plurality of depth sensing devices, more preferably a plurality of depth cameras.

5. The method of any one of the preceding claims, wherein the steering direction indicates one of a plurality of discrete steering directions;
wherein the plurality of discrete steering directions consists of three steering directions, namely straight driving, steering left, and steering right.

6. The method of any one of the preceding claims 1-4, wherein the steering direction indicates a steering angle;
wherein the steering angle corresponds to an orientation of an imaginary straight line (402) between the left hand (102) and the right hand (104).

7. The method of any one of the preceding claims, further comprising, in response to loosing track of at the left hand (102), the right hand (104) or both:
prompting the user to move the left hand (102) and/or the right hand (104) such that the left hand (102) and the right hand (104) are essentially arranged at a predefined distance; or
prompting the user to hold an object of a predefined size in the left hand (102) and the right hand (104), in particular an electronic mobile device of the user.

8. The method of any of the preceding claims 1-6, further comprising, in response to loosing track of the left hand (102), the right hand (104) or both:
determining the steering direction to indicate straight driving.

9. The method of any one of the preceding claims, further comprising, in response to tracking only one of the left hand (102) and the right hand (104) of the user in the interaction space:
transitioning from the steering wheel mode (302) into another control mode (304);
wherein the other control mode (304) enables the user to perform one or more of the following functions using touchless hand gestures, in particular one-handed touchless hand gestures:
controlling a device;
controlling a pointer on a display;
controlling an avatar in a virtual scene;
controlling a virtual object.

10. The method of any one of the preceding claims, further comprising:
mapping the steering direction to a pointer position, in particular a pointer position in two-dimensional space;
wherein the control command comprises the pointer position to indicate the steering direction;
wherein the pointer position is selected from one of a plurality of pointer positions and/or pointer position groups corresponding to the plurality of discrete steering directions of claim 5; or
wherein the pointer position is selected from a pointer position range corresponding to the steering angle of claim 6;
wherein, optionally, the pointer position range corresponding to the steering angle comprises a plurality of pointer positions on a straight line, in particular a horizontal straight line on an upper edge of a display area.

11. The method of any one of the preceding claims, wherein the control command is configured for one or more of:
controlling a game, in particular a racing game;
controlling a device;
controlling a vehicle;
controlling a simulation environment, in particular for training and/or testing purposes;
controlling a virtual environment, a physical environment or a hybrid environment, in particular a Metaverse environment, a hybrid meeting environment, a virtual reality environment, an augmented reality environment.

12. Use of at least a first and second sensor device, in particular a first and second depth sensing device, more preferably a first and second depth camera, in a method of any one of claims 1-11.

13. A data processing device, a digital signage device, a gaming device, a mobile user device or a control unit for any of these devices, comprising means for carrying out the method of any one of claims 1-11.

14. A vehicle or a control unit for a vehicle, comprising means for carrying out the method of any one of claims 1-11.

15. A computer program or a computer-readable medium having stored thereon a computer program, the computer program comprising instructions which, when the program is executed by a computer, cause the computer to carry out the method of any one of claims 1-11.
